# EUROPEAN PATENT APPLICATION

(11) **EP 4 470 356 A1**
(43) Date of publication of application: **04.12.2024**
(21) Application number: 24161739.8
(22) Date of filing: 06.03.2024
(51) Int. Cl.: A01D 34/00, B60L 58/12, B60L 58/14

(54) **EFFICIENT CHARGING OF AN OUTDOOR ROBOTIC WORK TOOL**

(30) Priority: 30.05.2023 SE 2350661
(71) Applicant: Husqvarna AB, 561 82 Huskvarna (SE)
(72) Inventor: Chedid, Michel, Huskvarna (SE); Alexiusson, Mikael, Huskvarna (SE); Lagercrantz, Gustaf, Huskvarna (SE)

(57) **Abstract**

The present disclosure relates to a method for a robotic work tool system (250) comprising at least one outdoor robotic work tool (100) with a rechargeable battery (155). The method comprises determining (S100) a current power level (L_{c1}, L_{c2}) for the battery (155) at a corresponding current position (P_{c1}, P_{c2}) when the robotic work tool (100) is operating, and determining (S300) if the battery (155) needs to be recharged in view of at least the determined current power level (L_{c1}, L_{c2}). For every time that is the case (S400), for a determined recharge power level (L_{R}) at a corresponding recharge position (P_{R}) where the determined recharge power level (L_{R}) falls below a threshold power level (L_{T}), the method further comprises interrupting operation and controlling (S500) the outdoor robotic work tool (100) to move to an outdoor robotic work tool charging station (200). Upon arrival at the outdoor robotic work tool charging station (200), the method comprises determining (S600) a current station power level (Lₛ) for the battery (155), and calculating (S700) a difference between the recharge power level (L_{R}) and the station power level (Ls).

## Description

### TECHNICAL FIELD

The present disclosure relates to an outdoor robotic work tool system with one or more outdoor robotic work tools and work tool charging station adapted to charge a rechargeable energy storage arrangement comprised in the outdoor robotic work tool.

### BACKGROUND

Automated or robotic work tools such as robotic lawn mowers are becoming increasingly more popular. In a typical deployment a work area, such as a garden, the work area can be enclosed by a boundary wire with the purpose of keeping the robotic lawn mower inside the work area. An electric control signal may be transmitted through the boundary wire thereby generating an (electro-) magnetic field emanating from the boundary wire. The robotic lawn mower is typically arranged with one or more sensors adapted to sense the control signal. Other types of navigation systems can be used instead of, or in combination with a boundary wire. Such navigation systems can for example be based on satellite navigation systems and/or local radio beacons or image processing such as Visual Simultaneous Localization and Mapping (VSLAM).

The robotic lawn mower can then cut grass on a user's lawn automatically and can be charged automatically without intervention of the user, and no longer needs to be manually managed after being set once. The robotic lawn mower typically comprises charging skids for contacting corresponding contact plates in a charging station when docking into the charging station for receiving a charging current through, and possibly also for transferring information by means of electrical communication between the charging station and the robotic lawn mower.

Normally there is a fixed setting where robotic lawn mower is controlled to return to the charging station when it reaches a fixed charge lever. CN114430988 discloses comparing the remaining power of ta battery pack with the average power required to return to the charging station from the current position.

There is, however, a need to provide even more improved methods and means for efficient charging and operation of robotic work tools.

### SUMMARY

The object of the present disclosure is to provide methods and means for efficient charging and operation of robotic work tools.

This object is achieved by means of method for a robotic work tool system comprising at least one outdoor robotic work tool charging station and at least one outdoor robotic work tool with a rechargeable electric power source. The method comprises determining a current power level for the rechargeable electric power source at a corresponding current position when the robotic work tool is operating, and determining if the rechargeable electric power source needs to be re-charged in view of at least the determined current power level. For every time that is the case, for a determined recharge power level at a corresponding recharge position where the determined recharge power level falls below a threshold power level, the method further comprises interrupting operation and controlling the outdoor robotic work tool to move to the outdoor robotic work tool charging station. Upon arrival at the outdoor robotic work tool charging station, the method comprises determining a current station power level for the rechargeable electric power source, and calculating a difference between the recharge power level and the station power level. This difference indicates the amount of power consumed for travelling between the corresponding recharge position to the outdoor robotic work tool charging station.

This means that the threshold power level when it has been determined suitable to control the robotic lawn mower to move to the charging station can be compared with with the current station power level such that the actual amount of power that in practice was consumed for travelling between the corresponding recharge position to the charging station can be determined. With this knowledge, different actions can be taken depending on requirements and circumstances, enabling an improved efficiency for charging and operation of robotic lawn mowers.

According to some aspects, the method further comprises adjusting the threshold power level in view of the amount of power consumed for travelling between the corresponding recharge position and the outdoor robotic work tool charging station.

This means that the threshold power level can be adjusted to better reflect the actual amount of power consumed for travelling between the corresponding recharge position and the outdoor robotic work tool charging station.

According to some aspects, the method further comprises determining if the amount of power consumed for travelling between the corresponding recharge position and the outdoor robotic work tool charging station falls below a difference threshold power level, and if that is the case, resuming operation.

This means that if a sufficiently small amount of power has been consumed when travelling between the corresponding recharge position and the charging station, the robotic lawn mower can be controlled to continue its cutting operation, either where it was interrupted or at another position. The continued cutting operation may be performed for a certain predetermined time, until a certain predetermined power level has been reached for the battery, or until predetermined amount of power has been consumed. Then the robotic lawn mower is controlled to return to the charging station.

According to some aspects, the method further comprises determining a current position and determining if the rechargeable electric power source needs to be re-charged in view of the determined current position, the determined current power level for the rechargeable electric power source at the determined current position, and at least one calculated amount of power consumed for travelling between a corresponding recharge position to the outdoor robotic work tool charging station.

Here a current position is determined, more or less accurate, and in view of how the pre-defined operation area is configured. For example, there may be obstacles that can be in the form of hedges, fences etc., where the robotic lawn mower 100 has to be controlled to move such these obstacles are avoided. This affects the path and the distance to travel from the recharge position to the charging station and the power consumed.

According to some aspects, the determined current position corresponds to a predetermined zone in a predetermined work area in which the robotic work tool is arranged to operate.

This means that the knowledge about the actual location of the determined current position in the predetermined work area can be more or less coarse. The more predetermined zones, the more accurately the robotic lawn mower can be located within the predetermined work area.

According to some aspects, the method further comprises determining a current power level during charging, and determining the amount of power required for completing the interrupted operation. The method further comprises controlling the robotic lawn mower to resume operation when the determined current power level (during charging exceeds the determined amount of power required for completing the interrupted operation.

This means that as soon as the battery is sufficiently charged, the robotic lawnmower is controlled to resume its interrupted operation. When this occurs can for example be determined by having knowledge of how much of the interrupted operation that remains, and where in the predetermined work area the recharge positions is located.

The present disclosure also relates to robotic work tool systems and computer programs that are associated with the above advantages.

### BRIEF DESCRIPTION OF THE DRAWINGS

The present disclosure will now be described more in detail with reference to the appended drawings, where:
- Figure 1A: shows a perspective side view of a robotic lawn mower;
- Figure 1B: shows a schematic overview of the robotic lawn mower;
- Figure 2A: shows a schematic side view of a charging station with a robotic lawn mower;
- Figure 2B: shows a schematic top view of Figure 2A;
- Figure 3: shows a schematic illustration of a robotic work tool system and a robotic work tool travelling to a charging station;
- Figure 4: shows a schematic side view of a robotic work tool travelling to a charging station;
- Figure 5: shows a schematic illustration of a system control unit;
- Figure 6: shows a schematic illustration of a computer program product; and
- Figure 7: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

It should be noted that even though the description given herein will be focused on robotic lawn mowers, the teachings herein may also be applied to any type of outdoor robotic work tool, such as for example robotic ball collectors, robotic mine sweepers and robotic farming equipment.

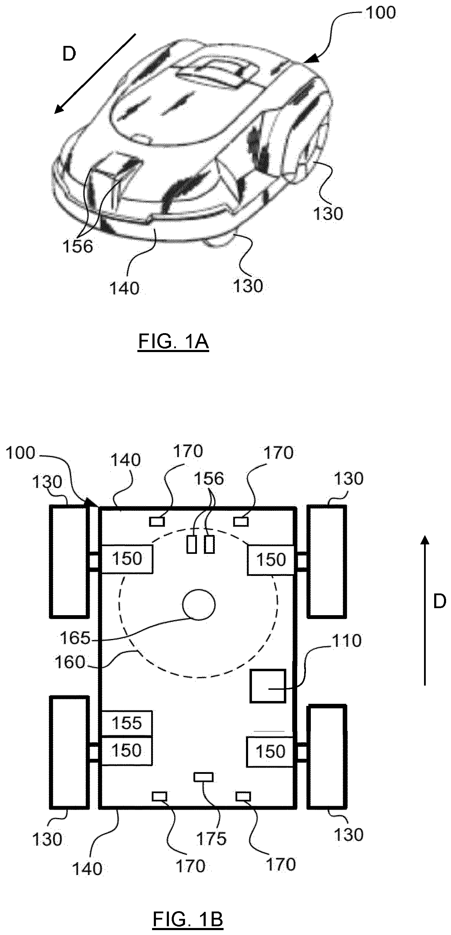

Figure 1A shows a perspective view of an example robotic lawn mower 100 and Figure 1B shows a schematic overview of the robotic lawn mower 100. According to some aspects, the robotic lawn mower 100 is adapted for a forward travelling direction D, has a main body 140 and a plurality of wheels 130; in this example the robotic lawn mower 100 has four wheels 130, two front wheels and two rear wheels. The robotic lawn mower 100 comprises a work tool control unit 110 and at least one electric motor 150, where at least some of the wheels 130 are drivably connected to at least one electric motor 150. It should be noted that even if the description herein is focused on electric motors, combustion engines may alternatively be used in combination with an electric motor arrangement. The robotic lawn mower 100 may be a multi-chassis type or a mono-chassis type. A multi-chassis type comprises two or more body parts that are movable with respect to one another. A mono-chassis type comprises only one main body part.

In this example embodiment, the robotic lawn mower 100 is of a mono-chassis type, having a main body part 140. The main body part 140 substantially houses all components of the robotic lawn mower 100.

The robotic lawn mower 100 also comprises a grass cutting device 160, such as a rotating blade or a disc 160 with a plurality of separate rotating blades driven by a cutter motor 165. The robotic lawn mower 100 also has at least one rechargeable electric power source such as a battery 155 for providing power to the electric motor arrangement 150 and/or the cutter motor 165.

According to some aspects, the robotic lawn mower 100 may further comprise at least one navigation arrangement 175 in a previously known manner, for example comprising a satellite navigation sensor in the form of a GPS (Global Positioning System) device or other Global Navigation Satellite System (GNSS) device, according to some aspects for example using Real Time Kinematic (RTK).

According to some aspects, the robotic lawn mower 100 further comprises at least one environment detection device 170. In this example, radar transceivers 170 are provided and adapted to transmit signals and to receive reflected signals in a previously well-known manner. To enable this, according to some aspects, each radar transceiver 170 comprises a corresponding transmitter arrangement and receiver arrangement together with other necessary circuitry in a well-known manner.

For this purpose, the work tool control unit 110 is adapted to control the environment detection device 170 and to control the speed and direction of the robotic lawn mower 100 in dependence of information acquired by means of the of the environment detection device 170 when the robotic lawn mower 100 is moving.

Generally, the work tool control unit 110 is adapted to at least partly process input data from at least one environmental detection device 170. The environmental detector device 170 can for example comprise at least one of a radar transceiver, Lidar transceiver, ultrasonic transceiver and/or a camera device.

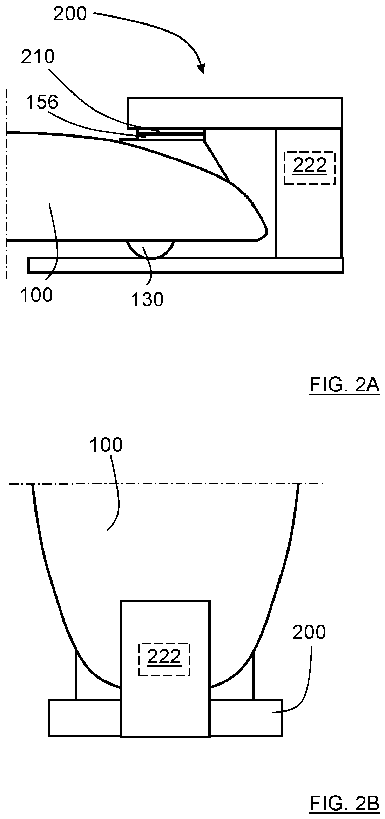

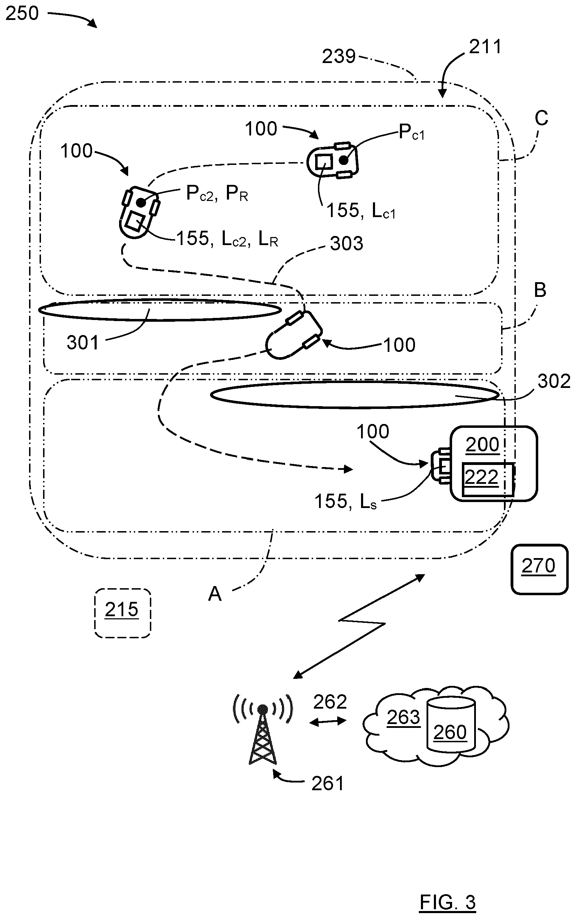

With reference to Figure 2A and Figure 2B that show a side view and a corresponding top view of a robotic lawn mower charging station 200 and the robotic lawn mower 100, and Figure 3 that shows a robotic lawn mower system 250, the robotic lawn mower system 250 comprises the robotic lawn mower charging station 200, the robotic lawn mower 100, and a system control unit 215. The charging station 200 comprises a charger control unit 222 and a charging transmission arrangement 210. The robotic lawn mower 100 comprises a rechargeable electric power source 155 such as a battery 155, the work tool control unit 110 and a charging reception arrangement 156, such as for example charging skids, adapted for making electrical contact with the charging transmission arrangement 210 such that charging of the battery 155 is enabled. This means that the charging transmission arrangement 210 is adapted to transfer a charging current to the charging reception arrangement 156.

The battery 155 is thus arranged to be charged by means of received charging current from the charging station 200, received through charging skids 156 or other suitable charging connectors that generally are constituted by the charging reception arrangement 156. Inductive charging without galvanic contact, only by means of electric contact, is also conceivable. According to some aspects, the battery 155 comprises one or more batteries that can be separately arranged or be arranged in an integrated manner to form a combined battery. Other types of rechargeable electric power sources are conceivable such as for example power cells.

According to some aspects, as shown in Figure 3, the work tool control unit 110 is adapted to control the robotic lawn mower 100 to move within the pre-defined operation area 211. The pre-defined operation area 211 is for example defined by using at least one of a boundary- or guide wire 239, satellite navigation and a local radio base station 214 that is used for providing a navigation signal, e.g. UWB, Ultra Wideband). Other examples are VSLAM (Visual simultaneous localization and mapping), a permanent magnet, a physical barrier, and an edge detecting sensor, such as a camera or radar detecting a grass edge. In Figure 3, the robotic lawn mower 100 is both shown during operation in a certain pre-defined operation area 211 and when docked to the charging station 200.

The system control unit 215 is adapted to determine a current power level L_{c1}, L_{c2} for the battery 155 at a corresponding current position P_{c1}, P_{c2} when the robotic lawn mower 100 is operating. In Figure 3, this is illustrated at a first current position P_{c1}, associated with a first current power level L_{c1} and a second current position P_{c2} associated with a second current power level L_{c2}. In this example, the robotic lawn mower 100 first reaches the first current position P_{c1} then the second current position P_{c2}. The term "current" indicates a state at a certain moment in time, at a first time there is the first current position P_{c1} and the first current power level L_{c1}, and at a subsequent second time there is the second current position P_{c2} and the second current power level L_{c2}.

The system control unit 215 is furthermore adapted to determine if the battery 155 needs to be re-charged in view of at least the determined current power level L_{c1}, L_{c2}. For every time that is the case, for a determined recharge power level L_{R} at a corresponding recharge position P_{R} where the determined recharge power level L_{R} falls below a threshold power level L_{T}, the system control unit 215 is furthermore adapted to interrupt operation and control the robotic lawn mower 100 to move to the charging station 200.

In the example illustrated in Figure 3, at the second current position P_{c2} that is associated with the second current power level L_{c2}, the system control unit 215 determines that the battery 155 needs to be re-charged. This means that in this example the second current position P_{c2} is the recharge position P_{R} and the second current power level L_{c2} is the recharge power level L_{R}. In other words, when the second current power level L_{c2} falls below the threshold power level L_{T}, it also becomes the recharge power level L_{R}.

According to the present disclosure, upon arrival at the charging station 200, the system control unit 215 is adapted to determine a current station power level Lₛ for the rechargeable electric power source 155, and to calculate a difference between the recharge power level L_{R} and the station power level L_{S}. This difference indicates the amount of power A_{c} consumed for travelling between the corresponding recharge position P_{R} to the charging station 200.

This means that the system control unit 215 can compare the threshold power level L_{T} when it has been determined suitable to control the robotic lawn mower 100 to move to the charging station 200 with the current station power level Lₛ and calculate the actual amount of power A_{c} that in practice was consumed for travelling between the corresponding recharge position P_{R} to the charging station 200. With this knowledge, different actions can be taken depending on requirements and circumstances, enabling an improved efficiency for charging and operation of robotic lawn mowers.

According to some aspects, the system control unit 215 is adapted to adjust the threshold power level L_{T} in view of the amount of power A_{c} consumed for travelling between the corresponding recharge position P_{R} and the charging station 200. This means that the threshold power level L_{T} is determined and adjusted such that it reflects the amount of power consumed A_{c}.

According to some aspects, the system control unit 215 is adapted to determine if the amount of power consumed A_{c} for travelling between the corresponding recharge position P_{R} and the charging station 200 falls below a difference threshold power level L_{TD}, and if that is the case, to control the robotic lawn mower 100 to resume operation.

This means that if a sufficiently small amount of power A_{c} has been consumed when travelling between the corresponding recharge position P_{R} and the charging station 200, the robotic lawn mower 100 can be controlled to continue its cutting operation, either where it was interrupted or at another position. The continued cutting operation may be performed for a certain predetermined time, until a certain predetermined power level has been reached for the battery 155, or until predetermined amount of power has been consumed. Then the robotic lawn mower 100 is controlled to return to the charging station 200.

The above may be performed for many different types of robotic lawn mowers and robotic lawn mower systems 250, for example a robotic lawn mower system where a robotic lawn mower only is guided by means of a boundary wire 239 and not having information where within the pre-defined operation area 211 the robotic lawn mower is located. In that case, the current positions P_{c1}, P_{c2} are not known to the robotic lawn mower system 250, and can be anywhere in the pre-defined operation area 211.

On the other hand, the present disclosure is of course also applicable for robotic lawn mower systems where robotic lawn mowers are guided more precisely as mentioned above, having more or less information regarding where in the pre-defined operation area 211 a current position P_{c1}, P_{c2} of the robotic lawn mower 100 is located. Examples of this are provided below.

According to some aspects, the system control unit 215 is adapted to determine a current position P_{c1}, P_{c2} and to determine S310 if the battery 155 needs to be re-charged in view of the determined current position P_{c1}, P_{c2}, the determined current power level L_{c1}, L_{c2} for the battery 155 at the determined current position P_{c1}, P_{c2}, and at least one calculated amount of power A_{c} consumed for travelling between a corresponding recharge position P_{R} to the charging station 200.

Here, the system control unit 215 is adapted to determine a current position P_{c1}, P_{c2} more or less accurate, and in view of how the pre-defined operation area 211 is configured. For example, as shown in Figure 3 there are obstacles 301, 302 that may be in the form of hedges, fences etc., where the robotic lawn mower 100 has to be controlled to move such these obstacles are avoided. This affects the path 303 and the distance to travel from the recharge position P_{R} to the charging station 200 and the power A_{c} consumed.

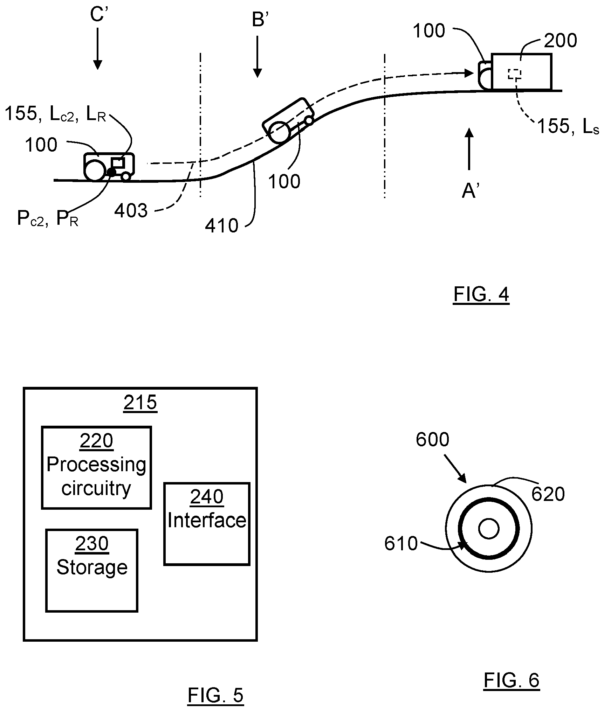

As indicated in Figure 4, where he second current position P_{c2} is the recharge position P_{R} and the second current power level L_{c2} is the recharge power level L_{R}, the robotic lawn mower has to travel upwards a slope 410 when moving from the recharge position P_{R} to the charging station 200 along a path 403. Travelling upwards the slope 410 of course affects the power A_{c} consumed.

The need to circumvent obstacles 301, 302 and/or travelling upwards one or more slopes 410 when moving from the recharge position P_{R} to the charging station 200 of course depends on the recharge position P_{R}, and if the actual location of the recharge position P_{R} is more or less known to the for robotic lawn mower system 250, different threshold power levels L_{T} can be determined and applied for different recharge positions P_{R}.

The determined a current position P_{c1}, P_{c2} can be more or less accurate depending on the type of navigation arrangement 175, some examples were disclosed previously.

According to some aspects, the determined current position P_{c1}, P_{c2} corresponds to a predetermined zone A, B, C; A', B', C' in a predetermined work area 211 in which the robotic lawn mower 100 is arranged to operate. This means that the robotic lawn mower system 250 has a more or less coarse knowledge of the actual location of the determined current position P_{c1}, P_{c2} in the predetermined work area 211. The more predetermined zones A, B, C; A', B', C', the more accurately the robotic lawn mower can be located within the predetermined work area 211.

In the example illustrated in Figure 3, there is a first predetermined zone A that is closest to the charging station 200 and defines an area that is on the same side of the obstacles 301, 302 as the charging station 200. There is also a second predetermined zone B that covers the obstacles 301, 302 and a third predetermined zone C that is farthest away from the charging station 200, the obstacles 301, 302 being positioned between the third predetermined zone C and the charging station 200.

In the example illustrated in Figure 4, there is a first predetermined zone A' that is closest to the charging station 200 and defines an area that is on the same side of the slope 410 as the charging station 200. There is also a second predetermined zone B' that covers the slope 410 and a third predetermined zone C' that is farthest away from the charging station 200, the slope 410 being positioned between the third predetermined zone C' and the charging station 200.

It is clear that having knowledge of in which predetermined zone A, B, C; A', B', C' the recharge position P_{R} is located, different threshold power levels L_{T} can be determined and applied.

According to some aspects, the system control unit 215 is adapted to determine a a current power level L_{cc} during charging, and to determine the amount P_{AC} of power required for completing the interrupted operation. The system control unit 215 is further adapted to control the robotic lawn mower to resume operation when the determined current power level L_{cc} during charging exceeds the determined amount P_{AC} of power required for completing the interrupted operation.

This means that as soon as the battery 155 is sufficiently charged, the robotic lawnmower is controlled to resume its interrupted operation. When this occurs can for example be determined by having knowledge of how much of the interrupted operation that remains, and where in the predetermined work area 211 the recharge positions P_{R} is located.

According to some aspects, the robotic lawn mower system 250 further comprises a remote server 260 that is adapted for wireless communication with at least the system control unit 215. According to some aspects, the remote server can be a part of a cloud service 263 and be adapted to communicate 262 via a communications system 261.

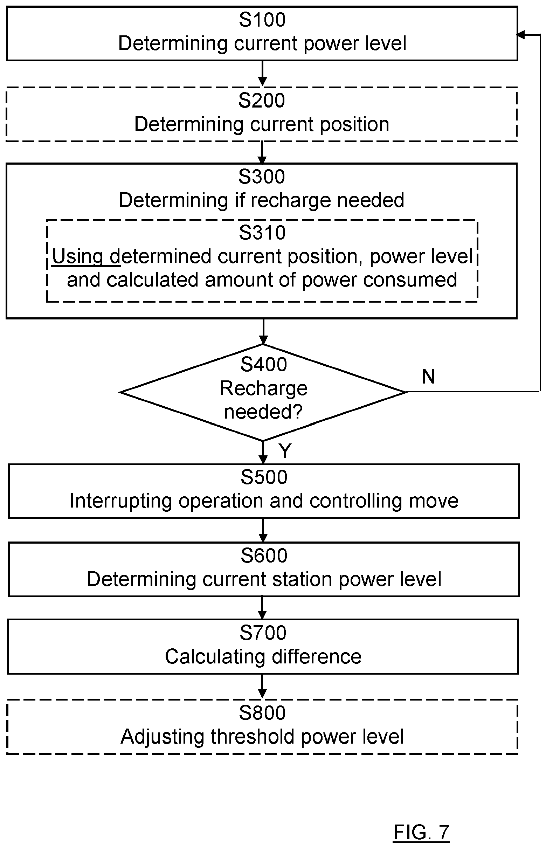

With reference to Figure 7, the present disclosure relates to a method for a robotic work tool system 250 comprising at least one outdoor robotic work tool charging station 200 and at least one outdoor robotic work tool 100 with a rechargeable electric power source 155. The method comprises determining S100 a current power level L_{c1}, L_{c2} for the rechargeable electric power source 155 at a corresponding current position P_{c1}, P_{c2} when the robotic work tool 100 is operating and determining S300 if the rechargeable electric power source 155 needs to be re-charged in view of at least the determined current power level L_{c1}, L_{c2}. For every time that is the case S400, for a determined recharge power level L_{R} at a corresponding recharge position P_{R} where the determined recharge power level L_{R} falls below a threshold power level L_{T}, the method further comprises interrupting operation and controlling S500 the outdoor robotic work tool 100 to move to the outdoor robotic work tool charging station 200, and upon arrival at the outdoor robotic work tool charging station 200, determining S600 a current station power level Lₛ for the rechargeable electric power source 155. The method further comprises calculating S700 a difference between the recharge power level L_{R} and the station power level L_{S}, indicating the amount of power A_{c} consumed for travelling between the corresponding recharge position P_{R} to the outdoor robotic work tool charging station 200.

According to some aspects, the method further comprises adjusting S800 the threshold power level L_{T} in view of the amount of power A_{c} consumed for travelling between the corresponding recharge position P_{R} and the outdoor robotic work tool charging station 200.

According to some aspects, the method further comprises determining if the amount of power consumed A_{c} for travelling between the corresponding recharge position P_{R} and the outdoor robotic work tool charging station 200 falls below a difference threshold power level L_{TD}, and if that is the case, resuming operation.

According to some aspects, the method further comprises determining S200 a current position P_{c1}, P_{c2} and determining S310 if the rechargeable electric power source 155 needs to be re-charged in view of the determined current position P_{c1}, P_{c2}, the determined current power level L_{c1}, L_{c2} for the rechargeable electric power source 155 at the determined current position P_{c1}, P_{c2}, and at least one calculated amount of power A_{c} consumed for travelling between a corresponding recharge position P_{R} to the outdoor robotic work tool charging station 200.

According to some aspects, the determined current position P_{c1}, P_{c2} corresponds to a predetermined zone A, B, C; A', B', C' in a predetermined work area 211 in which the robotic work tool 100 is arranged to operate.

According to some aspects, the method further comprises determining a current power level L_{cc} during charging, and determining the amount P_{AC} of power required for completing the interrupted operation. The method further comprises controlling the robotic lawn mower 100 to resume operation when the determined current power level L_{cc} during charging exceeds the determined amount P_{AC} of power required for completing the interrupted operation.

In Figure 5 it is schematically illustrated, in terms of a number of functional units, the components of the system control unit 215 according to embodiments of the discussions herein. Processing circuitry 220 is provided using any combination of one or more of a suitable central processing unit CPU, multiprocessor, microcontroller, digital signal processor DSP, etc., capable of executing software instructions stored in a computer program product, e.g. in the form of a storage medium 230. The processing circuitry 220 may further be provided as at least one application specific integrated circuit ASIC, or field programmable gate array FPGA. The processing circuitry thus comprises a plurality of digital logic components.

Particularly, the processing circuitry 220 is configured to cause the system control unit 215 to perform a set of operations, or steps to control the charging of the robotic lawn mower 100, acquiring information and communication information in accordance with the present disclosure. For example, the storage medium 230 may store the set of operations, and the processing circuitry 220 may be configured to retrieve the set of operations from the storage medium 230 to cause the system control unit 215 to perform the set of operations. The set of operations may be provided as a set of executable instructions. Thus, the processing circuitry 220 is thereby arranged to execute at least parts of the methods as herein disclosed.

The storage medium 230 may also comprise persistent storage, which, for example, can be any single one or combination of magnetic memory, optical memory, solid state memory or even remotely mounted memory.

According to some aspects, the system control unit 215 further comprises an interface 240 for communications with at least one external device such as a remote server 260, a user terminal 280 and a local server 270. As such the interface 240 may comprise one or more transmitters and receivers, comprising analogue and digital components and a suitable number of ports for wireline communication. The interface 240 can be adapted for communication with other devices, such as the remote server 260, the charging station 200, and/or other robotic working tools. Examples of such wireless communication devices are Bluetooth^{®}, WiFi^{®} (IEEE802.11b), Global System Mobile (GSM) and LTE (Long Term Evolution), to name a few.

Figure 6 shows a computer program product 600 comprising computer executable instructions 610 stored on media 620 to execute any of the methods disclosed herein.

The present disclosure relates to a computer program 610 for controlling charging of a robotic lawnmower 100 in a robotic lawn mower system 250 as described herein, where the computer program 610 comprises computer code which, when run on processing circuitry 220 of a system control unit 215, causes the system control unit 215 to perform the method as described herein.

According to some aspects, the computer program product 500 is implemented for the system control unit 215. According to some aspects, the system control unit 215 can be practically realized in many ways, for example as a single unit or being comprised in at least one of the charger control unit 222, the work tool control unit 110, the remote server 260, and the local server 270.

Generally, the robotic lawn mower is an outdoor robotic work tool 100, the robotic lawn mower charging station is an outdoor robotic work tool charging station 200 and the robotic lawn mower system is a robotic work tool system 250.

According to some aspects, the charging station can be constituted by an outdoor robotic work tool interaction station 200. Except charging, such an interaction station can be constituted by a maintenance station such as a knife sharping station, or a dumping station. The latter can for example be the case when the outdoor robotic work tool can be adapted to collect items such as leaves or golf balls. Another example of an interaction station is a marker of a lawn mower off-limit area such as an area around a plant that should be left.

The present disclosure is not limited to the above, but may vary freely within the scope of the appended claims. For example, the robotic work tool system 250 may comprise one or more outdoor robotic work tool charging stations 200 and one or more outdoor robotic work tools 100. Furthermore, the present disclosure is applicable for a plurality of such systems, where charging of the outdoor robotic work tools is these systems is controlled according to the present disclosure. In this way the features of the present disclosure can be applied to all these outdoor robotic work tools.

According to some aspects, the system control unit 215 is adapted to control the robotic lawn mower 100 in an autonomous manner. In order to control such autonomous actions, a machine-learning model may be implemented, for example by means of an algorithm based on convolutional neural networks (CNN). Such a machine-learning model can for example be taught to classify different objects, and to determine appropriate actions.

## Claims

1. A method for a robotic work tool system (250) comprising at least one outdoor robotic work tool charging station (200) and at least one outdoor robotic work tool (100) with a rechargeable electric power source (155), where the method comprises:
determining (S100) a current power level (L_{c1}, L_{c2}) for the rechargeable electric power source (155) at a corresponding current position (P_{c1}, P_{c2}) when the robotic work tool (100) is operating;
determining (S300) if the rechargeable electric power source (155) needs to be re-charged in view of at least the determined current power level (L_{c1}, L_{c2}); and
for every time that is the case (S400), for a determined recharge power level (L_{R}) at a corresponding recharge position (P_{R}) where the determined recharge power level (L_{R}) falls below a threshold power level (L_{T}), the method further comprises
interrupting operation and controlling (S500) the outdoor robotic work tool (100) to move to the outdoor robotic work tool charging station (200);
upon arrival at the outdoor robotic work tool charging station (200), determining (S600) a current station power level (Lₛ) for the rechargeable electric power source (155); and
calculating (S700) a difference between the recharge power level (L_{R}) and the station power level (Ls), indicating the amount of power (A_{c}) consumed for travelling between the corresponding recharge position (P_{R}) to the outdoor robotic work tool charging station (200).

2. The method according to claim 1, further comprising adjusting (S800) the threshold power level (L_{T}) in view of the amount of power (A_{c}) consumed for travelling between the corresponding recharge position (P_{R}) and the outdoor robotic work tool charging station (200).

3. The method according to any one of the claims 1 or 2, further comprising determining if the amount of power consumed (A_{c}) for travelling between the corresponding recharge position (P_{R}) and the outdoor robotic work tool charging station (200) falls below a difference threshold power level (L_{TD}), and if that is the case, resuming operation.

4. The method according to any one of the previous claims, further comprising
determining (S200) a current position (P_{c1}, P_{c2});
determining (S310) if the rechargeable electric power source (155) needs to be re-charged in view of the determined current position (P_{c1}, P_{c2}), the determined current power level (L_{c1}, L_{c2}) for the rechargeable electric power source (155) at the determined current position (P_{c1}, P_{c2}), and at least one calculated amount of power (A_{c}) consumed for travelling between a corresponding recharge position (P_{R}) to the outdoor robotic work tool charging station (200).

5. The method according to claim 4, wherein the determined current position (P_{c1}, P_{c2}) corresponds to a predetermined zone (A, B, C; A', B', C') in a predetermined work area (211) in which the robotic work tool (100) is arranged to operate.

6. The method according to any one of the previous claims, further comprising
determining a current power level (L_{cc}) during charging;
determining the amount (P_{AC}) of power required for completing the interrupted operation; and
controlling the robotic lawn mower (100) to resume operation when the determined current power level (L_{cc}) during charging exceeds the determined amount (P_{AC}) of power required for completing the interrupted operation.

7. A robotic work tool system (250) comprising at least one outdoor robotic work tool charging station (200), at least one outdoor robotic work tool (100), and a system control unit (215), where the outdoor robotic work tool charging station (200) comprises a charger control unit (222) and a charging transmission arrangement (210), and where the outdoor robotic work tool (100) comprises a rechargeable electric power source (155), a work tool control unit (110) and a charging reception arrangement (156) adapted for making electrical contact with the charging transmission arrangement (210) such that charging of the rechargeable electric power source (155) is enabled, where the system control unit (215) is adapted to perform the method according to any one of the previous claims.

8. The robotic work tool system (250) according to claim 7, further comprising at least one of a remote server (260) and a local server (270), where the system control unit (215) is comprised in at least one of the charger control unit (222), the work tool control unit (110), the remote server (260) and the local server (270).

9. A computer program (610) for controlling charging of a robotic lawnmower (100) in a robotic work tool system (250) according to any one of the claims 7 or 8, where the computer program (610) comprises computer code which, when run on processing circuitry (220) of a system control unit (215), causes the system control unit (215) to perform the method according to any one of the claims 1-6.
